# EUROPÄISCHE PATENTSCHRIFT

(11) **EP 3 309 402 B1**
(45) Veröffentlichungstag und Bekanntmachung des Hinweises auf die Patenterteilung: **15.09.2021**
(21) Anmeldenummer: 17192909.4
(22) Anmeldetag: 25.09.2017
(51) Int. Cl.: F04D 15/00, B29C 33/04, B29C 45/73, B29C 45/76

(54) **VERFAHREN ZUM AUFFINDEN EINER SOLL-FÖRDERLEISTUNG EINES PUMPENSYSTEMS**
METHOD FOR FINDING A TARGET OUTPUT CAPACITY OF A PUMP SYSTEM
PROCÉDÉ DE DÉTERMINATION D'UN DÉBIT CIBLE D'UN SYSTÈME DE POMPAGE

(30) Priorität: 14.10.2016 AT 509252016
(43) Veröffentlichungstag der Anmeldung: 18.04.2018
(73) Patentinhaber: ENGEL AUSTRIA GmbH, 4311 Schwertberg (AT)
(72) Erfinder: BALKA, Christoph, 4311 Schwertberg (AT)
(74) Vertreter: Torggler & Hofinger Patentanwälte

(56) Entgegenhaltungen:
- EP-A1- 1 250 992
- EP-A1- 2 762 290
- EP-A1- 2 781 335
- DE-A1-102015 008 371

## Beschreibung

Die vorliegende Erfindung betrifft ein Verfahren zum Auffinden einer Soll-Förderleistung eines zumindest eine Pumpe aufweisenden Pumpensystems für das Fördern eines Temperiermediums durch zumindest einen Temperierkanal eines Formwerkzeugs mittels der zumindest einen Pumpe. Die vorliegende Erfindung betrifft außerdem ein Pumpensystem zum Fördern eines Temperiermediums durch zumindest einen Temperierkanal eines Formwerkzeugs mit den Merkmalen des Oberbegriffs des Anspruchs 9 bzw. des Anspruchs 10.

Formwerkzeuge, welche in Formgebungsmaschinen, wie zum Beispiel Spritzgießmaschinen, Spritzpressen, Pressen und dergleichen zum Einsatz kommen, müssen in vielen Fällen temperiert, das heißt gezielt gekühlt oder erwärmt werden.

Diese Temperierung kann durch das Fördern eines Temperiermediums durch entsprechende Temperierkanäle, welche das Formwerkzeug durchsetzen, erreicht werden. Dabei werden in vielen Fällen mehrere Temperierkanäle eingesetzt und es ist bekannt den Temperiervolumenstrom durch die einzelnen Temperierkanäle beispielsweise nach dem Volumenstrom, dem Druckabfall, der Temperaturdifferenz oder dergleichen zu regeln. Hierfür sind in den einzelnen Temperierkanälen Drosseln als Stellglied für die Regelung vorhanden.

In der AT 513870 A1 wurde dann offenbart, auch eine Pumpe zu regeln, welche das Temperiersystem mit Temperiermedium versorgt. Indem die Pumpe so geregelt wird, dass zumindest eine der Drosseln fast vollständig geöffnet ist, kann die Pumpe in einem energiesparenden Betriebspunkt betrieben werden.

Das entsprechende System ist durch die hinzugekommene Regelung aufwändiger als zuvor und daher diesbezüglich verbesserungswürdig.

Aufgabe der Erfindung ist es daher, ein Verfahren und eine Vorrichtung bereit zu stellen, die auf vereinfachte Weise eine Bestimmung der Soll-Förderleistung erlauben.

Diese Aufgabe wird hinsichtlich des Verfahrens mit den Merkmalen des Anspruchs 1 oder des Anspruchs 2 gelöst. Dabei sind die Durchführung folgender Verfahrensschritte vorgesehen, nämlich dass
a) eine Regelung zumindest eines Temperiervolumenstroms durch den zumindest einen Temperierkanal unter Verwendung zumindest einer Drossel als Stellglied so durchgeführt wird, dass der zumindest eine Temperiervolumenstrom im Wesentlichen konstant bleibt,
b) ein Förderstrom des Pumpensystems gemessen wird,
c) die zumindest eine Pumpe ausgehend von einer Startförderleistung unabhängig von der Regelung des zumindest einen Temperiervolumenstroms so angesteuert wird, dass eine Förderleistung des Pumpensystems auf eine verringerte Förderleistung verringert wird, und
d) danach überprüft wird, ob der Förderstrom im Wesentlichen konstant bleibt und,
   i. falls dies der Fall ist, die verringerte Förderleistung als Soll-Förderleistung bestimmt wird oder,
   ii. falls dies trotz der Regelung des zumindest einen Temperiervolumenstroms nicht der Fall ist, die Startförderleistung als Soll-Förderleistung bestimmt wird.

Alternativ oder zusätzlich ist vorgesehen, dass die Verfahrensschritte c) und d) in folgender Ausprägung durchgeführt werden, nämlich dass
c) die zumindest eine Pumpe ausgehend von einer Startförderleistung unabhängig von der Regelung des zumindest einen Temperiervolumenstroms so angesteuert wird, dass eine Förderleistung des Pumpensystems auf eine erhöhte Förderleistung erhöht wird, und
d) danach überprüft wird, ob der Förderstrom im Wesentlichen konstant bleibt und,
   i. falls dies trotz der Regelung des zumindest einen Temperiervolumenstroms nicht der Fall ist, die erhöhte Förderleistung als Soll-Förderleistung bestimmt wird oder,
   ii. falls dies der Fall ist, die Startförderleistung als Soll-Förderleistung bestimmt wird.

Durch die beiden Ausprägungen des erfindungsgemäßen Verfahrens kann die Soll-Förderleistung ausgehend von einer für den zumindest einen Temperiervolumenstrom zu hohe oder zu niedrige Startförderleistung bestimmt werden.

Hinsichtlich der Vorrichtung wird diese Aufgabe durch die Merkmale des Anspruchs 9 oder des Anspruchs 10 gelöst.

Dies geschieht, indem die Ansteuervorrichtung für das Pumpensystem dazu ausgebildet ist,
- die zumindest eine Pumpe ausgehend von einer Startförderleistung unabhängig von einer separaten Regelung zumindest eines Temperiervolumenstroms so anzusteuern, dass sich eine Förderleistung des Pumpensystems auf eine verringerte Förderleistung verringert, und
- danach zu überprüfen, ob der Förderstrom im Wesentlichen konstant bleibt und,
   i. falls dies der Fall ist, die verringerte Förderleistung als eine Soll-Förderleistung zu bestimmen oder,
   ii. falls dies nicht der Fall ist, die Startförderleistung als Soll-Förderleistung zu bestimmen.

Alternativ oder zusätzlich ist vorgesehen, dass die Ansteuervorrichtung dazu ausgebildet ist,
- die zumindest eine Pumpe ausgehend von einer Startförderleistung unabhängig von einer separaten Regelung zumindest eines Temperiervolumenstroms nach einer Regelgröße so anzusteuern, dass sich eine Förderleistung des Pumpensystems auf eine erhöhte Förderleistung erhöht, und
- danach zu überprüfen, ob der Förderstrom im Wesentlichen konstant bleibt und,
   i. falls dies nicht der Fall ist, die erhöhte Förderleistung als eine Soll-Förderleistung zu bestimmen oder,
   ii. falls dies der Fall ist, die Startförderleistung als Soll-Förderleistung zu bestimmen.

Durch die beiden Ausprägungen des erfindungsgemäßen Pumpensystems kann die Soll-Förderleistung ausgehend von einer für den zumindest einen Temperiervolumenstrom zu hohe oder zu niedrige Startförderleistung bestimmt werden.

Ein wichtiger Aspekt der Erfindung besteht in der Erkenntnis, dass das Pumpensystem unabhängig von einer Regelung des Temperiervolumenstroms so angesteuert werden kann, dass ein optimierter Wert für eine Soll-Förderleistung des Pumpensystems aufgefunden werden kann. Dadurch kann die Ansteuerung des Pumpensystems komplett von einem Regelkreis für den zumindest einen Temperiervolumenstrom entkoppelt werden, was offensichtlich für eine Vereinfachung der Steuerung oder Regelung des Pumpensystems sorgt.

Als Kriterium für die Konstanz des Temperiervolumenstroms kann ein Wertebereich für den Temperiervolumenstrom dienen, den der Temperiervolumenstrom nicht verlassen darf, um als konstant zu gelten. Dieser Wertebereich kann beispielsweise durch einen Mittelwert und Grenzwerte für die Abweichung davon gegeben sein.

Dieses Kriterium kann auch herangezogen werden, um die Konstanz des Förderstroms festzustellen.

Die Regelung nach Verfahrensschritt a) bzw. die Messung des Förderstroms nach Verfahrensschritt b) kann ständig, das heißt kontinuierlich, oder "gepulst", das heißt in regelmäßigen oder unregelmäßigen Abständen, erfolgen.

Wichtig kann dabei sein, dass sowohl vor als auch nach der Durchführung des Verfahrensschritts c) eine Regelung nach Verfahrensschritt a) und/oder eine Messung nach Verfahrensschritt b) durchgeführt wird, um eine mögliche Änderung des Förderstroms erfassen zu können.

Verfahrensschritt d) inklusive i und ii wird nach Verfahrensschritt c) durchgeführt.

Als Temperiermedium kann beispielsweise Wasser oder Öl zum Einsatz kommen.

Zur Ansteuerung des Pumpensystems so, dass sich eine Förderleistung verringert, kann die Förderleistung einer oder mehrerer Pumpen des Pumpensystems zurückgefahren werden. Alternativ oder zusätzlich können eine oder mehrere Pumpen des Pumpensystems komplett abgeschaltet werden.

Nach der Bestimmung der Soll-Förderleistung kann es vorgesehen sein, das Pumpensystem mit dieser Soll-Förderleistung zu betreiben.

Als Regelgröße für die Regelung des zumindest einen Temperiervolumenstroms kann der zumindest eine Temperiervolumenstrom selbst herangezogen werden. Alternativ oder zusätzlich können Temperaturdifferenzen, Rücklauftemperaturen, Wärmemengen, Strömungsgeschwindigkeiten und ähnliche, mit dem Temperiervolumenstrom in bekannter physikalischer und/oder mathematischer Beziehung stehende Größen verwendet werden.

Weitere vorteilhafte Ausgestaltungen der Erfindung sind in den abhängigen Ansprüchen definiert.

Es kann bevorzugt vorgesehen sein, dass die Messung des Förderstroms des Pumpensystems mittels eines dem Pumpensystem vor- und/oder nachgeschalteten Sensors durchgeführt wird. Dies ermöglicht eine relativ einfache Bestimmung des Förderstroms. Der Sensor kann beispielsweise als Volumenstromsensor ausgeführt sein. Alternativ oder zusätzlich können vor- und nachgeschaltete Temperatursensoren, Drucksensoren oder Sensoren für mit diesen Größen physikalisch und/oder mathematisch in bekannter Beziehung stehende Größen zum Einsatz kommen.

Es kann aber auch vorgesehen sein, dass die Messung des Förderstroms des Pumpensystems im Rahmen der Regelung des zumindest einen Temperiervolumenstroms durchgeführt wird. Konstruktiv ist diese Alternative weniger aufwändig, da keine zusätzlichen Volumenstromsensoren notwendig sind.

Auch eine Kombination der Messung des Förderstroms durch eigene Sensoren oder Sensoren der Regelung des Temperiervolumenstroms, beispielsweise durch Mittelwertbildung oder dergleichen kann vorteilhaft sein.

Besonders bevorzugt vorgesehen kann es sein, dass die Verfahrensschritte c) und d) inklusive i. und ii. mehrmals durchgeführt werden, wobei als Startförderleistung jeweils die Soll-Förderleistung aus der vorhergehenden Durchführung verwendet wird. Durch die mehrmalige Durchführung des erfindungsgemäßen Verfahrens kann der Effekt der Erfindung verstärkt werden und eine energiesparendere Soll-Förderleistung aufgefunden werden.

Durch die Terminierung des Verfahrens, wenn der Fall ii. eintritt, kann ein fast optimaler Wert für die Soll-Förderleistung bestimmt werden (abgesehen von der "Schrittlänge" bei der Verringerung der Förderleistung des Pumpensystems).

Das erfindungsgemäße Verfahren kann durch einen Bediener gestartet werden, indem dieser eine Startförderleistung angibt, beispielsweise durch Übernahme einer momentanen Förderleistung des Pumpensystems, wenn dieses schon in Betrieb ist. Bediener können dadurch auf ganz einfache Weise das Optimierungsverfahren starten.

Auch eine automatische Optimierung kann erreicht werden, indem das erfindungsgemäße Verfahren dann gestartet wird, wenn die Förderleistung des Pumpensystems über eine vorherbestimmte Zeitspanne im Wesentlichen keine Veränderung erfährt. Als Kriterium dafür, dass die Förderleistung "im Wesentlichen keine Veränderung erfährt" kann ein Wertebereich dienen, wobei die Förderleistung dann als keine Veränderung aufweisend gilt, wenn sie den Wertebereich nicht verlässt. Der Wertebereich kann beispielsweise über einen Mittelwert und Grenzwerte für eine maximale Abweichung davon gegeben sein.

Besonders bevorzugt kann es vorgesehen sein, dass mehr als ein Temperierkanal vorhanden ist, wobei ein Verteiler vorgesehen ist, der den vom Pumpensystem geförderten Förderstrom auf die verschiedenen Temperierkanäle verteilt. Dabei kann in jedem der Temperierkanäle eine Drossel als Stellglied für die Regelung des zumindest einen Temperiervolumenstroms vorgesehen sein. Diese Drosseln können - ebenso wie Messgeräte zur Bereitstellung der rückgeführten Größe für die Regelung des zumindest einen Temperiervolumenstroms - in den Verteiler integriert sein. Es kann insbesondere vorgesehen sein, dass die Drosseln unabhängig voneinander geregelt werden.

Schutz begehrt wird ebenfalls für eine Formgebungsmaschine mit einem erfindungsgemäßen Pumpensystem und für ein Temperiergerät mit einem erfindungsgemäßen Pumpensystem.

Als Temperiergerät werden Geräte verstanden, welche unabhängig vom Formwerkzeug und der Formgebungsmaschine eine Quelle für die Temperierung des Formwerkzeugs und/oder Teile der Formgebungsmaschine darstellen können.

Insbesondere können Temperiergeräte eine Heizung zur Aufheizung des Förderstroms des Pumpensystems aufweisen. Natürlich kann alternativ oder zusätzlich auch eine Kühlvorrichtung zur Kühlung des Förderstroms vorgesehen sein.

Temperiergeräte können für die Versorgung einer einzelnen Prduktionseinheit bzw. Formgebungsmaschine ausgeführt sein.

Temperiergeräte können mobil sein.

Die Ansteuervorrichtung für das Pumpensystem kann in eine zentrale Maschinensteuerung der Formgebungsmaschine integriert sein oder separat von der zentralen Maschinensteuerung ausgeführt sein. Ähnliches gilt für eine Regelvorrichtung zur Regelung des Temperiervolumenstroms.

Weitere Vorteile und Einzelheiten der Erfindung ergeben sich anhand der Figuren sowie der zugehörigen Figurenbeschreibung. Dabei zeigen:
- Figur 1: einen groben Überblick über ein erfindungsgemäßes Pumpensystem zusammen mit einem Formwerkzeug,
- Figur 2: eine genauere Darstellung der Ausführung nach Figur 1 sowie
- Figur 3: ein Ablaufdiagramm zur Verdeutlichung des erfindungsgemäßen Verfahrens.

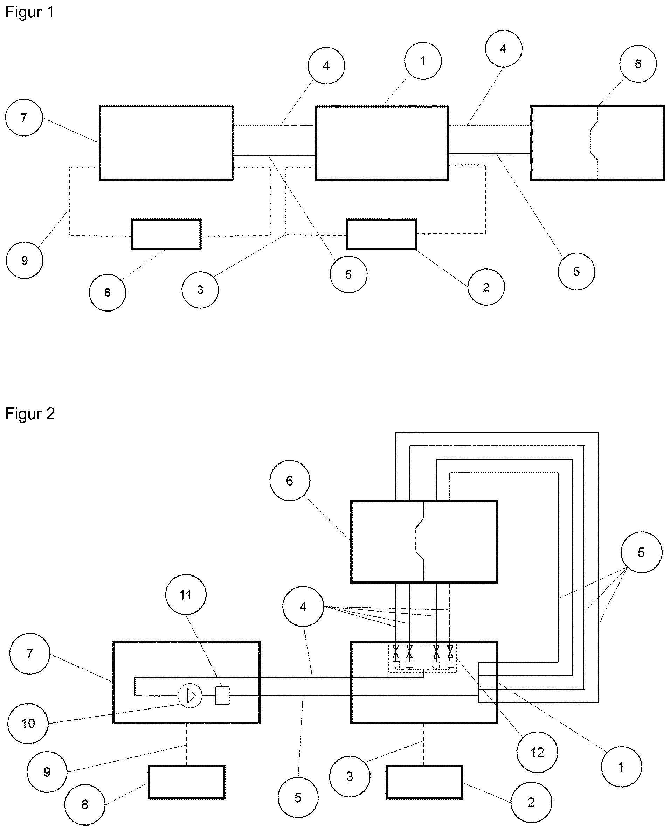

Schematisch sind in Figur 1 das Pumpensystem 7, der Verteiler 1 sowie das Formwerkzeug 6 dargestellt. Das Pumpensystem 7 fördert Temperiermedium (beispielsweise Wasser ggf. mit Zusätzen) durch den Vorlauf 5 der Temperierkanäle durch das Formwerkzeug 6 und zurück über den Rücklauf 4 der Temperierkanäle. Selbstverständlich kann das System auch offen, das heißt mit Tank, ausgeführt sein. Die Ansteuervorrichtung 8 ist über eine Schnittstelle 9 mit dem Pumpensystem 7 verbunden. Über die Schnittstelle 9 steuert die Ansteuervorrichtung 8 die Pumpen 10 (siehe Figur 2) des Pumpensystems 7 an. Außerdem werden Messwerte von Volumenstromsensoren 11 (siehe ebenfalls Figur 2) über die Schnittstelle 9 zur Ansteuervorrichtung 8 übertragen. Dem Verteiler 1 ist eine Regelvorrichtung 2 zugeordnet. Es ist ebenfalls eine Schnittstelle 3 vorhanden, über die die Regelvorrichtung 2 Messwerte entsprechender Volumenstromsensoren in den Temperierkanälen erhält. Die Regelvorrichtung 2 verwendet die Messwerte der Volumenstromsensoren als rückgeführte Größen für die Regelung der Temperiervolumenströme. Als Stellglied dienen dabei Drosseln, die in den Temperierkanälen angeordnet sind und unabhängig von dem Pumpensystem und voneinander geregelt werden.

In Figur 2 sind die Blöcke aus der Figur 1 detaillierter dargestellt.

Das Pumpensystem 7 verfügt im vorliegenden Fall über eine Pumpe 10 sowie Volumenstromsensoren 11 zur Erfassung des Förderstroms des Pumpensystems 7.

Statt der Volumenstromsensoren 11 könnten alternativ oder zusätzlich vor- und nachgeschaltete Drucksensoren und/oder Temperatursensoren zum Einsatz kommen. Natürlich können für die Erfassung des Förderstroms jegliche Sensoren zum Einsatz kommen, die eine oder mehrere Größe messen, welche in einem bekannten physikalischen und/oder mathematischen Verhältnis zum Förderstrom stehen.

Die Messung der Förderleistung des Pumpensystems 7 kann beispielsweise über die elektrische Leistungsaufnahme der Antriebe der Pumpen 10 vonstattengehen. Natürlich ist es ohne weiteres auch möglich, sowohl den Förderstrom des Pumpensystems 7 als auch den Druckabfall zu messen und daraus die Förderleistung zu berechnen.

Im Verteiler 1 ist dargestellt, wie der Vorlauf 5 der Temperierkanäle in hier rein beispielsweise vier Temperierkanäle aufgespalten wird. Im Verteiler 1 werden außerdem die Rückläufe 4 wieder zu einem einzigen Rücklauf 4 zusammengefasst und dem Pumpensystem 7 zugeführt.

Im Rücklauf 4 sind außerdem die Messgeräte und Stellglieder (Drosseln) für die Regelung der Temperiervolumenströme vorgesehen. Diese sind zusammen mit dem Bezugszeichen 12 versehen. (Als Regelgröße werden die Temperiervolumenströme selbst verwendet.)

Das Pumpensystem in diesem Ausführungsbeispiel ist Teil eines nicht dargestellten T emperiergeräts.

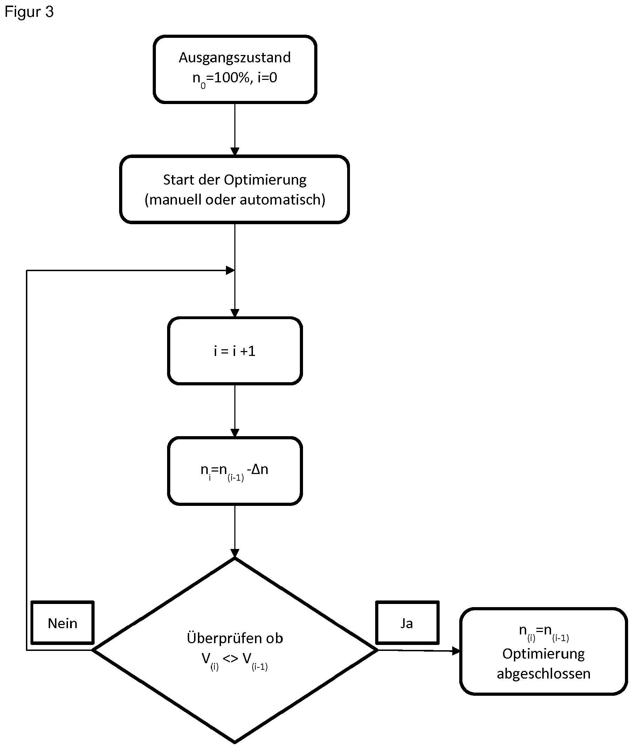

In Figur 3 ist ein Ablaufdiagramm dargestellt, welches ein erfindungsgemäßes Verfahren verdeutlicht. Im Ausgangszustand wird beispielsweise eine drehzahlgeregelte (alternativ: gesteuerte) Pumpe mit einer Startförderleistung betrieben (n(₀) =100%).

Dann wird die Optimierung gestartet - entweder durch einen Bediener oder automatisch. Es wird festgehalten, dass die erste Iteration des Verfahrens durchgeführt wird, bzw. allgemeiner dass das Verfahren im Iterationsschritt i + 1 steht. Dies ist angedeutet durch "i = i+1".

Dann wird die Förderleistung herabgesetzt, indem die Drehzahl des Antriebs für die Pumpe 10 um Δn heruntergesetzt wird. Es wird dann überprüft, ob der Förderstrom V(ᵢ) im jeweiligen Schritt eine Verringerung erfährt. Ist dies nicht der Fall, kann eine weitere Iteration des Verfahrens gestartet werden. Ist dies schon der Fall, wird die Optimierung beendet und die Drehzahl im vorherigen Schritt wird zur Festlegung der Soll-Förderleistung verwendet.

Selbstverständlich kann das erfindungsgemäße Verfahren nicht nur mit drehzahlgeregelten Pumpen durchgeführt werden. Die Veränderungen der Förderleistung des Pumpensystems kann auch mit Verstellpumpen (dann gesteuert und/oder geregelt nach Pumpendrehzahl und/oder Pumpenverstellwinkel) oder durch Abschalten von Pumpen des Pumpensystems erfolgen.

## Patentansprüche

1. Verfahren zum Auffinden einer Soll-Förderleistung eines zumindest eine Pumpe (10) aufweisenden Pumpensystems (7) für das Fördern eines Temperiermediums durch zumindest einen Temperierkanal (4, 5) eines Formwerkzeugs (6) mittels der zumindest einen Pumpe (10), wobei
a) eine Regelung zumindest eines Temperiervolumenstroms durch den zumindest einen Temperierkanal (4, 5) nach einer Regelgröße unter Verwendung zumindest einer Drossel (12) als Stellglied so durchgeführt wird, dass der zumindest eine Temperiervolumenstrom im Wesentlichen konstant bleibt,
b) ein Förderstrom des Pumpensystems (7) gemessen wird,
c) die zumindest eine Pumpe (10) ausgehend von einer Startförderleistung unabhängig von der Regelung des zumindest einen Temperiervolumenstroms so angesteuert wird, dass eine Förderleistung des Pumpensystems auf (7) eine verringerte Förderleistung verringert wird, und
d) danach überprüft wird, ob der Förderstrom im Wesentlichen konstant bleibt und,
i. falls dies der Fall ist, die verringerte Förderleistung als Soll-Förderleistung bestimmt wird oder,
ii. falls dies trotz der Regelung des zumindest einen Temperiervolumenstroms nicht der Fall ist, die Startförderleistung als Soll-Förderleistung bestimmt wird.

2. Verfahren zum Auffinden einer Soll-Förderleistung eines zumindest eine Pumpe (10) aufweisenden Pumpensystems (7) für das Fördern eines Temperiermediums durch zumindest einen Temperierkanal (4, 5) eines Formwerkzeugs (6) mittels der zumindest einen Pumpe (10), wobei
a) eine Regelung zumindest eines Temperiervolumenstroms durch den zumindest einen Temperierkanal (4, 5) nach einer Regelgröße unter Verwendung zumindest einer Drossel (12) als Stellglied so durchgeführt wird, dass der zumindest eine Temperiervolumenstrom im Wesentlichen konstant bleibt,
b) ein Förderstrom des Pumpensystems (7) gemessen wird,
c) die zumindest eine Pumpe (10) ausgehend von einer Startförderleistung unabhängig von der Regelung des zumindest einen Temperiervolumenstroms so angesteuert wird, dass eine Förderleistung des Pumpensystems auf (7) eine erhöhte Förderleistung erhöht wird, und
d) danach überprüft wird, ob der Förderstrom im Wesentlichen konstant bleibt und,
i. falls dies trotz der Regelung des zumindest einen Temperiervolumenstroms nicht der Fall ist, die erhöhte Förderleistung als Soll-Förderleistung bestimmt wird oder,
ii. falls dies der Fall ist, die Startförderleistung als Soll-Förderleistung bestimmt wird.

3. Verfahren nach Anspruch 1 oder 2, **dadurch gekennzeichnet, dass** die Messung des Förderstroms des Pumpensystems (7) mittels eines dem Pumpensystem (7) vor- und/oder nachgeschalteten Sensors durchgeführt wird.

4. Verfahren nach einem der vorhergehenden Ansprüche, **dadurch gekennzeichnet, dass** die Messung des Förderstroms des Pumpensystems (7) im Rahmen der Regelung des zumindest einen Temperiervolumenstroms durchgeführt wird.

5. Verfahren nach einem der vorhergehenden Ansprüche, **dadurch gekennzeichnet, dass** die Verfahrensschritte c) und d) inklusive i. und ii. mehrmals durchgeführt werden, wobei als Startförderleistung jeweils die Soll-Förderleistung aus der vorhergehenden Durchführung verwendet wird.

6. Verfahren nach Anspruch 5, **dadurch gekennzeichnet, dass** das Verfahren terminiert wird, wenn der Fall ii. eintritt.

7. Verfahren nach einem der vorhergehenden Ansprüche, **dadurch gekennzeichnet, dass** das Verfahren gestartet wird, wenn
- dies durch einen Bediener unter Eingabe einer Startförderleistung veranlasst wird und/oder
- wenn die Förderleistung des Pumpensystems (7) über eine vorherbestimmte Zeitspanne im Wesentlichen keine Veränderung erfährt.

8. Verfahren nach einem der vorhergehenden Ansprüche, **dadurch gekennzeichnet, dass** mehrere Drosseln (12) in mehreren Temperierkanälen (4,5) verwendet werden, wobei die Drosseln (12) vorzugsweise unabhängig voneinander geregelt werden.

9. Pumpensystem zum Fördern eines Temperiermediums durch zumindest einen Temperierkanal (4, 5) eines Formwerkzeugs, insbesondere betrieben nach einem der Ansprüche 1 bis 8, mit zumindest einer Pumpe (10) sowie einer Ansteuervorrichtung (8) zum Ansteuern der zumindest einen Pumpe (10), welche einen Signaleingang (9) für Messwerte eines Volumenstromsensors zum Erfassen einer Förderleistung des Pumpensystems (7) aufweist, **dadurch gekennzeichnet, dass** die Ansteuervorrichtung (8) dazu ausgebildet ist,
- die zumindest eine Pumpe (10) ausgehend von einer Startförderleistung unabhängig von einer separaten Regelung zumindest eines Temperiervolumenstroms nach einer Regelgröße so anzusteuern, dass sich eine Förderleistung des Pumpensystems (7) auf eine verringerte Förderleistung verringert, und
- danach zu überprüfen, ob der Förderstrom im Wesentlichen konstant bleibt und,
i. falls dies der Fall ist, die verringerte Förderleistung als eine Soll-Förderleistung zu bestimmen oder,
ii. falls dies nicht der Fall ist, die Startförderleistung als Soll-Förderleistung zu bestimmen.

10. Pumpensystem zum Fördern eines Temperiermediums durch zumindest einen Temperierkanal (4, 5) eines Formwerkzeugs, insbesondere betrieben nach einem der Ansprüche 1 bis 8, mit zumindest einer Pumpe (10) sowie einer Ansteuervorrichtung (8) zum Ansteuern der zumindest einen Pumpe (10), welche einen Signaleingang (9) für Messwerte eines Volumenstromsensors zum Erfassen einer Förderleistung des Pumpensystems (7) aufweist, **dadurch gekennzeichnet, dass** die Ansteuervorrichtung (8) dazu ausgebildet ist,
- die zumindest eine Pumpe (10) ausgehend von einer Startförderleistung unabhängig von einer separaten Regelung zumindest eines Temperiervolumenstroms nach einer Regelgröße so anzusteuern, dass sich eine Förderleistung des Pumpensystems (7) auf eine erhöhte Förderleistung erhöht, und
- danach zu überprüfen, ob der Förderstrom im Wesentlichen konstant bleibt und,
i. falls dies nicht der Fall ist, die erhöhte Förderleistung als eine Soll-Förderleistung zu bestimmen oder,
ii. falls dies der Fall ist, die Startförderleistung als Soll-Förderleistung zu bestimmen.

11. Pumpensystem nach Anspruch 9 oder 10, **dadurch gekennzeichnet, dass** ein Verteiler (1) zur Verteilung des Förderstroms auf mehrere - vorzugsweise parallel geschaltete - Temperierkanäle (4, 5) vorgesehen ist.

12. Pumpensystem nach Anspruch 11, **dadurch gekennzeichnet, dass** in jedem der Temperierkanäle (4, 5) eine Drossel (12) als Stellglied für die Regelung des zumindest einen Temperiervolumenstroms vorgesehen ist.

13. Formgebungsmaschine mit einem Pumpensystem nach einem der Ansprüche 9 bis 12.

14. Formgebungsmaschine nach Anspruch 13, **dadurch gekennzeichnet, dass** die Ansteuervorrichtung (8) in eine zentrale Maschinensteuerung der Formgebungsmaschine integriert ist oder separat von der zentralen Maschinensteuerung ausgeführt ist.

15. Formgebungsmaschine nach Anspruch 13 oder 14, **dadurch gekennzeichnet, dass** eine Regelvorrichtung (2) zur Regelung des zumindest einen Temperiervolumenstroms in eine zentrale Maschinensteuerung der Formgebungsmaschine integriert ist oder separat von der zentralen Maschinensteuerung ausgeführt ist.

16. Temperiergerät mit einem Pumpensystem nach einem der Ansprüche 9 bis 12.

## Claims

1. A method for finding a target conveying capacity of a pumping system (7) having at least one pump (10) for conveying a temperature-control medium through at least one temperature-control channel (4, 5) of a molding tool (6) by means of the at least one pump (10), wherein
a) a control at least of one temperature-control volume flow through the at least one temperature-control channel (4, 5) is carried out according to a control variable by using at least one throttle (12) as an actuating element such that the at least one temperature-control volume flow remains substantially constant,
b) a conveying flow of the pumping system (7) is measured,
c) the at least one pump (10) starting from a starting conveying capacity independent of the control of the at least one temperature-control volume flow is driven such that a conveying capacity of the pumping system (7) is reduced to a reduced conveying capacity, and
d) then it is checked whether the conveying flow remains substantially constant and,
i. if this is the case, the reduced conveying capacity is determined to be the target conveying capacity or,
ii. if this is not the case despite the control of the at least one temperature-control volume flow, the starting conveying capacity is determined to be the target conveying capacity.

2. A method for finding a target conveying capacity of a pumping system (7) having at least one pump (10) for conveying a temperature-control medium though at least one temperature-control channel (4, 5) of a molding tool (6) by means of the at least one pump (10), wherein
a) a control at least of one temperature-control volume flow through the at least one temperature-control channel (4, 5) is carried out according to a control variable by using at least one throttle (12) as an actuating element such that the at least one temperature-control volume flow remains substantially constant,
b) a conveying flow of the pumping system (7) is measured,
c) the at least one pump (10) starting from a starting conveying capacity independent of the control of the at least one temperature-control volume flow is driven such that a conveying capacity of the pumping system (7) is increased to an increased conveying capacity, and
d) then it is checked whether the conveying flow remains substantially constant and,
i. if this is not the case despite the control of the at least one temperature-control volume flow, the increased conveying capacity is determined to be the target conveying capacity or,
ii. if this is the case, the starting conveying capacity is determined to be the target conveying capacity.

3. The method as claimed in claim 1 or 2, **characterized in that** the measurement of the conveying flow of the pumping system (7) is carried out by means of a sensor upstream and/or downstream of the pumping system (7).

4. The method as claimed in any one of the preceding claims, **characterized in that** the measurement of the conveying flow of the pumping system (7) is carried out as part of the control of the at least one temperature-control volume flow.

5. The method as claimed in any one of the preceding claims, **characterized in that** the method steps c) and d) including i. and ii. are carried out repeatedly, wherein in each case the target conveying capacity from the preceding implementation is used as the starting conveying capacity.

6. The method as claimed in claim 5, **characterized in that** the method is terminated if the case ii. occurs.

7. The method as claimed in any one of the preceding claims, **characterized in that** the method is started, if
- this is caused by an operator by inputting a starting conveying capacity and/or
- if the conveying capacity of the pumping system (7) over a predetermined time period substantially experiences no change.

8. The method as claimed in any one of the preceding claims, **characterized in that** a plurality of throttles (12) is used in a plurality of temperature-control channels (4, 5), wherein the throttles (12) are preferably controlled independently of one another.

9. A pumping system for conveying a temperature-control medium through at least one temperature-control channel (4, 5) of a molding tool, in particular, operated as claimed in any one of claims 1 to 8, with at least one pump (10) as well as a drive device (8) for driving the at least one pump (10), which has a signal input (9) for the measured values of a volume flow sensor for sensing a conveying capacity of the pumping system (7), **characterized in that** the drive device (8) is designed
- to drive the at least one pump (10) starting from a starting conveying capacity independent of a separate control at least of one temperature-control volume flow according to a control variable such that a conveying capacity of the pumping system (7) is reduced to a reduced conveying capacity, and
- then to check whether the conveying flow remains substantially constant and,
i. if this is the case, to determine the reduced conveying capacity to be a target conveying capacity or,
ii. if this is not the case, to determine the starting conveying capacity to be the target conveying capacity.

10. A pumping system for conveying a temperature-control medium through at least one temperature-control channel (4, 5) of a molding tool, in particular, operated as claimed in any one of claims 1 to 8, with at least one pump (10) as well as one drive device (8) for driving the at least one pump (10), which has a signal input (9) for measured values of a volume flow sensor for sensing a conveying capacity of the pumping system (7), **characterized in that** the drive device (8) is designed
- to drive the at least one pump (10) starting from a starting conveying capacity independent of a separate control at least of one temperature-control volume flow according to a control variable such that a conveying capacity of the pumping system (7) is increased to an increased conveying capacity, and
- then to check whether the conveying flow remains substantially constant and,
i. if this is not the case, to determine the increased conveying capacity to be a target conveying capacity or,
ii. if this is the case, to determine the starting conveying capacity to be the target conveying capacity.

11. The pumping system as claimed in claim 9 or 10, **characterized in that** a distributor (1) is provided for distributing the conveying flow to several - preferably parallel-connected ― temperature-control channels (4, 5).

12. The pumping system as claimed in claim 11, **characterized in that** in each of the temperature-control channels (4, 5) a throttle (12) is provided as an actuating element for the control of the at least one temperature-control volume flow.

13. A molding machine with a pumping system as claimed in any one of claims 9 to 12.

14. The molding machine as claimed in claim 13, **characterized in that** the drive device (8) is integrated into a central machine control of the molding machine or is designed separately from the central machine control.

15. The molding machine as claimed in claim 13 or 14, **characterized in that** a control device (2) for controlling the at least one temperature-control volume flow is integrated into the central machine control of the molding machine or is designed separately from the central machine control.

16. A temperature-control device with a pumping system as claimed in any one of claims 9 to 12.

## Revendications

1. Procédé pour trouver une capacité de transport de consigne d'un système de pompage (7) présentant au moins une pompe (10) pour le transport d'un fluide de thermorégulation à travers au moins un canal de thermorégulation (4, 5) d'un moule (6) au moyen de l'au moins une pompe (10), dans lequel
a) une régulation d'au moins un débit volumique de thermorégulation à travers l'au moins un canal de thermorégulation (4, 5) est réalisée selon une grandeur de régulation au moyen d'au moins un restricteur (12) en tant qu'organe de réglage, de sorte que l'au moins un débit volumique de thermorégulation reste sensiblement constant,
b) un débit de transport du système de pompage (7) est mesuré,
c) l'au moins une pompe (10) est commandée à partir d'une capacité de transport de départ indépendamment de la régulation de l'au moins un débit volumique de thermorégulation, de sorte qu'une capacité de transport du système de pompage (7) est réduite à une capacité de transport réduite, et
d) il est contrôlé ensuite si le débit de transport reste sensiblement constant et,
i. si tel est le cas, la capacité de transport réduite est déterminée comme capacité de transport de consigne ou,
ii. si tel n'est pas le cas malgré la régulation de l'au moins un débit volumique de thermorégulation, la capacité de transport de départ est déterminée comme capacité de transport de consigne.

2. Procédé pour trouver une capacité de transport de consigne d'un système de pompage (7) présentant au moins une pompe (10) pour le transport d'un fluide de thermorégulation à travers au moins un canal de thermorégulation (4, 5) d'un moule (6) au moyen de l'au moins une pompe (10), dans lequel
a) une régulation d'au moins un débit volumique de thermorégulation à travers l'au moins un canal de thermorégulation (4, 5) est réalisée selon une grandeur de régulation au moyen d'au moins un restricteur (12) en tant qu'organe de réglage, de sorte que l'au moins un débit volumique de thermorégulation reste sensiblement constant,
b) un débit de transport du système de pompage (7) est mesuré,
c) l'au moins une pompe (10) est commandée à partir d'une capacité de transport de départ indépendamment de la régulation de l'au moins un débit volumique de thermorégulation, de sorte qu'une capacité de transport du système de pompage est augmentée à (7) une capacité de transport augmentée, et
d) il est ensuite contrôlé si le débit de transport reste sensiblement constant et,
i. si tel n'est pas le cas malgré la régulation de l'au moins un débit volumique de thermorégulation, la capacité de transport augmentée est déterminée comme capacité de transport de consigne ou,
ii. si tel est le cas, la capacité de transport de départ est déterminée comme capacité de transport de consigne.

3. Procédé selon la revendication 1 ou 2, **caractérisé en ce que** la mesure du débit de transport du système de pompage (7) est réalisée au moyen d'un capteur monté en amont et/ou en aval du système de pompage (7).

4. Procédé selon l'une quelconque des revendications précédentes, **caractérisé en ce que** la mesure du débit de transport du système de pompage (7) est réalisée dans le cadre de la régulation de l'au moins un débit volumique de thermorégulation.

5. Procédé selon l'une quelconque des revendications précédentes, **caractérisé en ce que** les étapes de procédé c) et d) y compris i. et ii. sont réalisées plusieurs fois, dans lequel respectivement la capacité de transport de consigne provenant de la réalisation précédente est utilisée comme capacité de transport de départ.

6. Procédé selon la revendication 5, **caractérisé en ce que** le procédé est terminé lorsque le cas ii. se produit.

7. Procédé selon l'une quelconque des revendications précédentes, **caractérisé en ce que** le procédé est démarré lorsque
- ceci est demandé par un utilisateur par entrée d'une capacité de transport de départ et/ou
- lorsque la capacité de transport du système de pompage (7) ne subit sensiblement aucune modification pendant un laps de temps prédéfini.

8. Procédé selon l'une quelconque des revendications précédentes, **caractérisé en ce que** plusieurs restricteurs (12) sont utilisés dans plusieurs canaux de thermorégulation (4, 5), dans lequel les restricteurs (12) sont régulés de préférence indépendamment les uns des autres.

9. Système de pompage pour transporter un fluide de thermorégulation à travers au moins un canal de thermorégulation (4, 5) d'un moule, en particulier fonctionnant selon l'une quelconque des revendications 1 à 8, avec au moins une pompe (10) ainsi qu'un dispositif de commande (8) pour commander l'au moins une pompe (10), lequel présente une entrée de signal (9) pour des valeurs de mesure d'un capteur de débit volumique pour détecter une capacité de transport du système de pompage (7), **caractérisé en ce que** le dispositif de commande (8) est réalisé
- pour commander l'au moins une pompe (10) à partir d'une capacité de transport de départ indépendamment d'une régulation séparée d'au moins un débit volumique de thermorégulation selon une grandeur de régulation, de sorte qu'une capacité de transport du système de pompage (7) est réduite à une capacité de transport réduite, et
- pour contrôler ensuite si le débit de transport reste sensiblement constant et,
i. si tel est le cas, pour déterminer la capacité de transport réduite comme une capacité de transport de consigne ou,
ii. si tel n'est pas le cas, pour déterminer la capacité de transport de départ comme capacité de transport de consigne.

10. Système de pompage pour transporter un fluide de thermorégulation à travers au moins un canal de thermorégulation (4, 5) d'un moule, en particulier fonctionnant selon l'une quelconque des revendications 1 à 8, avec au moins une pompe (10) ainsi qu'un dispositif de commande (8) pour commander l'au moins une pompe (10), lequel présente une entrée de signal (9) pour des valeurs de mesure d'un capteur de débit volumique pour détecter une capacité de transport du système de pompage (7), **caractérisé en ce que** le dispositif de commande (8) est réalisé
- pour commander l'au moins une pompe (10) à partir d'une capacité de transport de départ indépendamment d'une régulation séparée d'au moins un débit volumique de thermorégulation selon une grandeur de régulation, de sorte qu'une capacité de transport du système de pompage (7) est augmentée à une capacité de transport augmentée, et
- pour contrôler ensuite si le débit de transport reste sensiblement constant et,
i. si tel n'est pas le cas, pour déterminer la capacité de transport augmentée comme une capacité de transport de consigne ou,
ii. si tel est le cas, pour déterminer la capacité de transport de départ comme capacité de transport de consigne.

11. Système de pompage selon la revendication 9 ou 10, **caractérisé en ce qu'**un répartiteur (1) est prévu pour la répartition du débit de transport sur plusieurs canaux de thermorégulation (4, 5) - de préférence montés en parallèle.

12. Système de pompage selon la revendication 11, **caractérisé en ce qu'**un restricteur (12) comme organe de réglage pour la régulation de l'au moins un débit volumique de thermorégulation est prévu dans chacun des canaux de thermorégulation (4, 5).

13. Machine de façonnage avec un système de pompage selon l'une quelconque des revendications 9 à 12.

14. Machine de façonnage selon la revendication 13, **caractérisée en ce que** le dispositif de commande (8) est intégré dans une commande de machine centrale de la machine de façonnage ou est réalisé séparément de la commande de machine centrale.

15. Machine de façonnage selon la revendication 13 ou 14, **caractérisée en ce qu'**un dispositif de régulation (2) pour la régulation de l'au moins un débit volumique de thermorégulation est intégré dans une commande de machine centrale de la machine de façonnage ou réalisé séparément de la commande de machine centrale.

16. Appareil de thermorégulation avec un système de pompage selon l'une quelconque des revendications 9 à 12.
